# EUROPEAN PATENT APPLICATION

(11) **EP 3 440 925 A1**
(43) Date of publication of application: **13.02.2019**
(21) Application number: 18188068.3
(22) Date of filing: 08.08.2018
(51) Int. Cl.: A01F 15/08, G01G 19/12

(54) **BALER CONNECTABLE TO A TRACTOR FOR PROVIDING ROUND BALES AND METHOD FOR WEIGHING A ROUND BALE IN A BALER**

(30) Priority: 11.08.2017 IT 201700093581
(71) Applicant: Kverneland Group Ravenna S.r.l., 48026 Russi (RA) (IT)
(72) Inventor: FRASCELLA, Cosimo, 74023 LUGO (Ravenna) (IT); CASADEI, Valerio, 47522 CESENA (Forlì-Cesena) (IT)
(74) Representative: Conti, Marco

(57) **Abstract**

A baler (1) connectable to a tractor (2) for providing round bales, comprises: an axle (6), having a first end (601) and a second end (602); a first wheel (4) and a second wheel (4), pivotally coupled to the first (601) and second end (602) of the axle (6), respectively; a frame (3) including a chamber (5) for receiving crops and for housing a formed bale, the frame (3) being supported on the axle (6); a weighing system, for providing information about a weight of the bale, the weighing system including at least one load cell (803, 804, 805), being positioned at the axle (6) and/or at a coupling point (101) for detecting a load parameter, representative of a weight force exerted thereon.

## Description

This invention relates to a baler connectable to a tractor for providing round bales and to a method for weighing a round bale in a baler.

Balers are commonly used in agricultural field to collect crops, hay or straw forming compact bales, that may have a round or square shape.

Specifically, the present invention relates to a baler for providing round bales; the baler includes a weighing system. Weighing systems are provided in balers in order to sense a weight of a bale during and after bale formation in a baling chamber.

Balers with weighing systems are known for example from patent documents EP2745675, US9267836, EP3036986, US832653, US20160187185, which disclose balers including at least one load sensor, namely a load cell. Load cells are generally configured to produce a signal variable with their compression or deflection, thereby providing an indication of the bale weight.

In EP2745675 the load cells measure the weight force exerted thereon, thus working by compression, and may be positioned at an axle or at a coupling point of the baler.

In US9267836 the load cells are interposed between a baler main frame and an axle, or, alternatively, on a tongue of the baler, and produce a signal variable with their deflection.

Such load cells require a complex manufacturing and provide weighing measurements strongly affected both by vibrations that may occur in the baler during bale formation and by unavoidable flexion of the axle, resulting in less reliability of the measurements themselves.

Scope of the present invention is to overcome at least one of the aforementioned drawbacks.

This scope is achieved by the baler and the method according to the appended claims.

The baler is connectable to a tractor. The baler is configured for providing round bales.

The baler includes an axle. The axle has a first end. The axle has a second end. The second end is opposite to the first end.

The baler includes a first wheel. The first wheel is pivotally connected to the first end of the axle. The baler includes a second wheel. The second wheel is pivotally connected to the second end of the axle.

The baler includes a frame. The frame in an embodiment includes a chamber. The chamber in an embodiment is configured for receiving crops. The chamber in an embodiment is configured for receiving hay (straw). The chamber is configured for housing a formed bale. The frame is connected to the axle. The frame in an embodiment is supported by the axle.

The baler in an embodiment includes a chamber. The chamber is configured for receiving crops. The chamber is configured for housing the forming bale. The chamber is configured for housing the formed bale. The baler in an embodiment includes a plurality of rollers. The rollers in this embodiment delimit the chamber. In an embodiment, the dimension of the formed bale is fixed.

The baler in an embodiment includes a plurality of belts. The belts in this embodiment delimit the chamber. In an embodiment, the dimension of the formed bale is variable, according to the arrangement of the belts.

The baler in an embodiment includes a weighing system. The weighing system is configured for providing information about a weight of the bale (for example, during or after bale formation).The weighing system in an embodiment includes an extensometer. For extensometer, it is here intended an instrument for measuring the deformation of a material under stress. The extensometer in an embodiment is a strain gauge. The extensometer (or strain gauge) is configured for indicating the strain of a material at a point of attachment of the extensometer to the material. In the following, we are mentioning "the extensometer", assuming that in an embodiment the extensometer is a "strain gauge".

The extensometer in an embodiment is attached to the axle. The extensometer in an embodiment is directly attached to the axle. The extensometer in an embodiment is glued to the axle. The extensometer in an embodiment has a sticker surface, applied to the axle.

The extensometer in an embodiment is configured to detect a load parameter. In an embodiment, the load parameter is a flexion parameter. The flexion parameter in an embodiment is representative of a flexion of at least a portion of the axle.

The baler in an embodiment includes a processing unit. The processing unit in an embodiment is connected to the extensometer. The extensometer in an embodiment is configured for sending the flexion parameter to the processing unit. The processing unit in an embodiment is configured to receive the flexion parameter. The processing unit in an embodiment is programmed to process the flexion parameter to derive a weight parameter. The weight parameter in an embodiment is representative of a weight of the bale.

The extensometer, in an embodiment, is configured to detect an empty baler flexion (or load) parameter, representative of a flexion of said at least a portion of the axle with the baler in empty conditions. The extensometer in an embodiment is configured for sending the empty baler flexion parameter to the processing unit. The processing unit in an embodiment is configured to receive the empty baler flexion parameter. The processing unit in an embodiment is configured to memorize the empty baler flexion parameter.

The processing unit, in an embodiment, is programmed to derive the weight parameter in dependence to the flexion parameter, with reference to the empty baler flexion parameter. In other words, the weight parameter depends on the difference between the flexion parameter and the empty baler flexion parameter.

The processing unit, in an embodiment, is programmed to approximate the weight parameter calculated in dependence to the difference between the flexion parameter and the empty baler flexion parameter.

The extensometer allows to achieve a very simple and reliable weighing measurement. Actually, the extensometer takes advantage of the unavoidable flexion of the axle, that for other load cells constitutes a disturbance of the measurement, and is not affected by vibrations that may occur in the baler.

The frame in an embodiment is connected to the axle at a first connecting zone. The extensometer in an embodiment is attached to the axle at a measuring zone. The extensometer in an embodiment is glued to the axle at the measuring zone. The measuring zone in an embodiment is spaced apart from the first connecting zone. This feature is distinctive with respect to the load cells commonly used in the balers.

The axle in an embodiment has a reduced section area at the measuring zone. This feature increases the flexion of the axle in the measuring zone, thus increasing the sensitivity of the extensometer.

In an embodiment, the first connecting zone is proximate the first axle end. In an embodiment, the frame is (further) connected to the axle at a second connecting zone. The second connecting zone in an embodiment is proximate the second axle end.

The weighing system in an embodiment includes a first extensometer. The first extensometer in an embodiment is attached to the axle at a first measuring zone. The first extensometer in an embodiment is glued to the axle at the first measuring zone. The first measuring zone in an embodiment is positioned between the first connecting zone and the first axle end. Actually, between the first connecting zone and the first axle end, the flexion of the axle is high, so the sensitivity of the measurement is reliable.

The weighing system in an embodiment includes a second extensometer. The second extensometer in an embodiment is attached to the axle at a second measuring zone. The second extensometer in an embodiment is glued to the axle at the second measuring zone. The second measuring zone in an embodiment is positioned between the second connecting zone and the second axle end.

The baler in an embodiment includes a first hub. The first hub in an embodiment provides the first end of the axle. The first hub in an embodiment provides the first measuring zone. Actually, between the first connecting zone and the first axle end, the flexion of the axle is high, so the sensitivity of the measurement is reliable.

The baler in an embodiment includes a second hub. The second hub in an embodiment provides the second end of the axle. The second hub in an embodiment provides the second measuring zone. Actually, between the second connecting zone and the second axle end, the flexion of the axle is high, so the sensitivity of the measurement is reliable.

The baler in an embodiment includes a central shaft. The central shaft in an embodiment is interposed between the first and the second hubs. The first hub in an embodiment is removably connected to the central shaft. The second hub in an embodiment is removably connected to the central shaft. The first hub in an embodiment is bolted to the central shaft. The second hub in an embodiment is bolted to the central shaft.

The first hub in an embodiment has a section area lower than a section area of the central shaft. The second hub in an embodiment has a section area lower than a section area of the central shaft. The first hub section area in an embodiment is equal to the second hub section area.

In an embodiment, the first hub provides the first end of the axle. In an embodiment, the second hub provides the second end of the axle. The first extensometer in an embodiment is attached to the first hub. The second extensometer in an embodiment is attached to the second hub. In this embodiment, the first (second) extensometer is not necessary positioned between the first (second) connecting zone and the first (second) axle end. In an embodiment, the frame is connected to the axle in a central connecting zone. The first extensometer, in this embodiment, is positioned between the central connecting zone and the first wheel. The second extensometer, in this embodiment, is positioned between the central connecting zone and the second wheel. In another embodiment, the first hub provides the first connecting zone. In this embodiment, the second hub provides the second connecting zone.

The baler, in an embodiment, is movable in a longitudinal direction. The axle, in an embodiment, is elongated in a transversal direction. The transversal direction, in an embodiment, is perpendicular to the longitudinal direction. The extensometer, in an embodiment, is elongated in the transversal direction. The first extensometer, in an embodiment, is elongated in the transversal direction. The second extensometer, in an embodiment, is elongated in the transversal direction.

In at least one embodiment, at least a portion of the axle includes an aperture. In an embodiment, at least a portion of the axle includes a plurality of apertures.

In an embodiment, the aperture may include a blind hole. In combination or as alternative, one aperture may be provided which defines a through hole.

The aperture defines an inner surface; the inner surface includes a lateral surface. If the aperture is a blind hole, the inner surface includes a bottom surface, further to the lateral surface. The bottom surface is positioned at a reduced radial distance from an axis of the axle, with respect to an external surface of the axle. In an embodiment, the bottom surface of the aperture is concentric with the external surface of the axle.

In an embodiment, the extensometer is attached to the inner surface of the aperture. The extensometer, in an embodiment, is attached to the bottom surface of the aperture (which, in this case, includes a blind hole). The extensometer, in an embodiment, is attached to the lateral surface of the aperture (which may include a blind hole or a through hole).

A first aperture, in an embodiment, is provided in the first hub. A second aperture, in one embodiment, is provided in the second hub. The first aperture defines an inner surface. In an embodiment, the first extensometer is attached to the inner surface of the first aperture. The second aperture defines an inner surface. In an embodiment, the second extensometer is attached to the inner surface of the second aperture.

In at least one embodiment, the measuring zone is defined by the inner surface of the aperture provided in the axle. In one embodiment, the first measuring zone is defined by the inner surface of the first aperture. In one embodiment, the second measuring zone is defined by the inner surface of the second aperture. In these embodiments, the axle has a reduced section area at the measuring zone.

The weighing system, in an embodiment, includes a plurality of extensometers. The extensometers of said plurality in an embodiment are attached to the axle at a measuring zone. The extensometers of said plurality, in an embodiment, are angularly spaced on the periphery of a surface of the axle, at the measuring zone. The extensometers of said plurality, in at least one embodiment, are arranged with different orientations, at the measuring zone.

In at least one embodiment, the weighing system includes a first extensometer and a second extensometer, attached to a surface of the axle (external or internal to the apertures) at the measuring zone. The first extensometer is elongated in a first direction (axis), the second extensometer is elongated in a second direction (axis). In one embodiment, the second direction is transversal to the first direction. In another embodiment, the second direction is parallel to the first direction, wherein, preferably, the first direction (axis) is spaced apart from the second direction (axis). In one example, the first and second extensometer may partially overlap. For example, they may be attached to the axle in a "cross" configuration.

In an embodiment, the weighing system includes an object (to be used as a reference by the control unit). The object in an embodiment has a predetermined mass. This mass (or its weight is known, predetermined conditions) is known by the control unit.

The object in an embodiment is connected to the frame. The object in an embodiment is positioned on top of the frame of the baler.

The object in an embodiment is connected to the axle.

The baler, in an embodiment, includes a tailgate. The tailgate in an embodiment is connected to the frame. The tailgate, in an embodiment, is movable between a closed position and an open position, for discharging a formed bale. The baler, in an embodiment, includes a hitch (or tongue). The hitch in an embodiment is connected to the frame. The hitch in an embodiment is connectable to the tractor at a coupling point.

According to one or more aspects of the present invention, the weighing system includes at least one load cell. What is described with reference to the extensometer (specifically, the calculation of the empty baler load parameter to derive the weight of the empty baler) applies also, mutatis mutandis, to the embodiments wherein the load sensor is a load cell.

Said at least one load cell is positioned at the axle and/or at the coupling point. In fact, the axle and the coupling point constitute the points of the baler which receive the weight of the bale. Said at least one load cell is configured for detecting a load parameter, representative of a load (weight) force exerted thereon.

In an embodiment, said at least one load cell includes a plurality of load cells.

In an embodiment, said at least one load cell includes a hitch load cell positioned at the coupling point. In an embodiment, the hitch load cell is interposed between the hitch of the baler and the tractor. In an embodiment, the hitch load cell is configured to measure a traction (or flexion) force exerted thereon (which is proportional to a weight of the baler).

In an embodiment, the said at least one load cell includes a couple of axle load cells positioned at the axle. In an embodiment, the axle load cells of said couple of axle load cells are positioned on the axle, at a same distance from a symmetry axis of the baler. The symmetry axis of the baler passes by the hitch. The symmetry axis of the baler is parallel to a direction of motion of the baler. In an embodiment, the axle load cells of said couple of axle load cells are interposed between the frame and the axle. In an embodiment, the axle load cells of said couple of axle load cells are configured to measure a compression force exerted thereon (which is proportional to a weight of the baler).

In an embodiment, the weighing system includes a reference load cell (in the following also indicated as "load cell"). The object, in an embodiment, is supported by the reference load cell. The object, in an embodiment, is supported on the reference load cell. The object, in an embodiment, is positioned on top of the reference load cell (in this case, the reference load cell is configured to measure a compression force exerted by the object). The object in an embodiment, is positioned under the reference load cell, attached to the reference load cell (in this case, the reference load cell is configured to measure a flexion force exerted by the object).

In an embodiment, the reference load cell is linked to the frame. In an embodiment, the object is linked to the frame.

In an embodiment, the reference load cell is connected to the frame in a nearby of a center of mass of the baler (or of the bale). In an embodiment, the object is connected to the frame (through the reference load cell) in a nearby of a center of mass of the baler (or of the bale). In an embodiment, the reference load cell is attached to a wall of the baling chamber.

The reference load cell, in an embodiment, is configured for detecting a reference weight signal (in the following also indicated as "weight signal") representative of the force (compression or flexion force) exerted by the object on the load cell. The reference load cell is configured for detecting a predetermined flat weight signal, representative of the force exerted by the object on the reference load cell when the baler is positioned on a flat surface. The flat weight signal is directly related to the mass of the object. The reference load cell in an embodiment is configured for sending the reference weight signal to the processing unit. The processing unit in an embodiment is configured for receiving the reference weight signal. The reference load cell in an embodiment is configured for sending the flat weight signal to the processing unit. The processing unit in an embodiment is configured for receiving the flat weight signal.

The force exerted by the object on the reference load cell depends on the gradient of the field on which the baler is working. Thus, the weight signal is dependent on the gradient of the field. The weight signal actually varies from the flat weight signal, detected when the gradient is null, to a weight signal dependent on the gradient of the field.

It is also provided, in an embodiment, to measure the gradient of the field through an inclinometer including an accelerometer positioned in an electronic board. In this embodiment, the weigh parameter is calculated as a function of the gradient detected by the inclinometer and of the load parameter detected by said at least one load cell.

Said accelerometer, in an embodiment, is sensitive both to the inclination by rotation about a transverse axis (parallel to the axle of the wheels), transverse to the longitudinal axis, and to the inclination by rotation about the longitudinal axis (corresponding substantially to the direction in which the baler moves). In one embodiment, the accelerometer is part of an electronic board; preferably, the electronic board includes the control unit of the baler. It should be noted that the accelerometer could be used in addition or to replace the object with reference load cell.

In an embodiment, the processing unit is programmed for deriving the weight parameter as a function of the flexion (or load) parameter and of the reference weight signal detected by the reference load cell. In an embodiment, the processing unit is programmed for deriving the weight parameter as a function of the difference between the flexion (or load) parameter and the empty baler flexion (or load) parameter, and as a function of the reference weight signal detected by the reference load cell. Actually, in an embodiment, the processing unit is configured for comparing the reference weight signal detected by the reference load cell with the (known) flat weight signal. In an embodiment, the processing unit is configured for deriving, from the comparison between the reference weight signal detected by the reference load cell and the flat weight signal, a gradient correction factor.

The relation between the gradient correction factor and the gradient of the field, in an embodiment, is representable by one or more formulas. The relation, in an embodiment, is representable by an experimental curve. The processing unit, in an embodiment, is configured for setting said one or more formulas (by a user). The processing unit, in an embodiment, is configured for setting said experimental curve (by a user). The processing unit, in an embodiment, is configured for memorize said one or more formulas. The processing unit, in an embodiment, is configured for memorize said experimental curve. The processing unit, in an embodiment, is configured for calculating said correction factor through said one or more formulas. The processing unit, in an embodiment, is configured for calculating said gradient correction factor through said experimental curve.

The processing unit, in an embodiment, is programmed for applying said gradient correction factor to the flexion parameter, to derive the weight parameter. The processing unit, in an embodiment, is programmed for applying said gradient correction factor to the difference between the flexion parameter and the empty baler flexion parameter, to derive the weight parameter that is representative of the weight of the bale, also considering the gradient of the field.

The present description covers also a method for weighing a round bale in a baler to be connected to a tractor.

Generally speaking, the method is a method for producing a round bale in a baler connected to a tractor.

The method for producing a round bale in a baler connected to a tractor includes a step of weighing the round bale in the baler (to be connected to the tractor).

The method in an embodiment includes a step of providing a frame. The frame includes a chamber. The frame is supported by an axle. The axle, in an embodiment, is pivotally connected to opposite wheels at its ends. The axle, in an embodiment, is pivotally connected to a first wheel at its first end. The axle in an embodiment, is pivotally connected to a second wheel at its second end, opposite to the first end.

The method, in an embodiment, includes a step of providing a tailgate. The method, in an embodiment, includes a step of movably connecting the tailgate to the frame.

The method, in an embodiment, includes a step of moving a tailgate to a closed position. In the closed position, the tailgate cooperates with the frame to form a chamber.

The method in an embodiment includes a step of forming a bale. The bale is formed inside the chamber. The step of forming the bale in an embodiment includes rotating crops inside the chamber. The rotating of the crops, in an embodiment, is carried out by a plurality of rollers. The rotating of the crops, in another embodiment, is carried out by a plurality of belts. The step of forming the bale, in an embodiment, comes after the step of moving the tailgate to the closed position.

The method, in an embodiment, includes a step of binding the formed bale with a fastening element. The step of binding, in an embodiment, is carried out when the bale has been formed. The step of binding, in an embodiment, is carried out when the tractor has stopped. The bale, in an embodiment, is bound inside the chamber.

The method, in an embodiment, includes a step of moving the tailgate to an open position, to discharge the bound bale. The method, in an embodiment, includes a step of discharging the bale.

The step of weighing the round bale in the baler, in an embodiment, comes after the step of forming the round bale. In another embodiment, the step of weighing the bale is carried out at least in part simultaneously with the step of forming the bale. In a possible embodiment, the weighing is carried out for the entire duration of bale's formation. The step of weighing the round bale in the baler, in an embodiment, comes before the step of binding the formed bale. The step of weighing the round bale in the baler, in an embodiment, comes after the step of binding the formed bale.

The step of weighing the round bale in the baler, in a preferred embodiment, is carried out when the bale is inside the chamber. The step of weighing the round bale in the baler comes before the step of discharging the bale.

Therefore, the present description covers a method of weighing a round bale in a baler to be connected to a tractor.

In an embodiment, the method includes a step of detecting a load parameter. In an embodiment, the step of detecting the load parameter includes measuring a weight force exerted on at least one load cell. In an embodiment, the step of detecting the load parameter is carried out through a couple of axle load cells positioned on the axle and through a hitch load cell positioned at the coupling point. In an embodiment, the step of detecting the load parameter includes a sub step of measuring a traction force exerted on the hitch load cell. In an embodiment, the step of detecting the load parameter includes a sub step of measuring a compression force exerted on the couple of axle load cells.

The method in an embodiment includes a step of detecting a flexion parameter. The flexion parameter is representative of a flexion of the axel. The method, in an embodiment, includes a step of providing an extensometer (or strain gauge). The method, in an embodiment, comprises a step of attaching the extensometer to the axle. The detecting of the flexion parameter, in an embodiment, is carried out through the extensometers. The one or more extensometers (strain gauges) in an embodiment, are attached to the axle at a measuring zone. The measuring zone, in an embodiment, is interposed between one of the axle ends and a connecting zone. The connecting zone defines where the frame is connected to the axle.

The one or more extensometers in an embodiment include a first extensometer and a second extensometer. The first extensometer in an embodiment is attached to a first hub. The fist hub provides the first end of the axle. The second extensometer in an embodiment is attached to a second hub. The second hub provides the second end of the axle.

The first axle in an embodiment provides a first measuring zone. The second axle in an embodiment provides a second measuring zone.

The first measuring zone in an embodiment is positioned between a first connecting zone and the first axle end. The second measuring zone in an embodiment is positioned between a second connecting zone and the second axle end. The first and second connecting zone provide a connection of the frame to the axle.

The method in an embodiment includes a step of detecting an empty baler flexion parameter. The empty baler flexion parameter is representative of a flexion of the axel when the baler is empty. The step of measuring an empty baler flexion parameter is carried out when the baler is empty.

The method in an embodiment includes a step of deriving a weight parameter. The weight parameter is representative of a weight of the bale. The weight parameter in an embodiment is derived as a function of the flexion parameter.

The weight parameter, in an embodiment, is a function of the difference between the flexion parameter and an empty baler flexion parameter.

The weight parameter in an embodiment is derived as a function of the load parameter detected by said at least one load cell.

The method, in an embodiment, includes a step of providing an aperture in the axle. The aperture, in at least one embodiment, is provided in the first hub or in the second hub. The aperture may include a through hole or a blind hole. The method, in an embodiment, includes a step of attaching the extensometer to an inner surface of said aperture.

The method, in an embodiment, comprises a step of providing an object having a predetermined mass. The object is attached to the baler. The method, in an embodiment, comprises a step of providing a reference load cell, included in the baler. The reference load cell, in an embodiment, is connected to the object. The object in an embodiment is supported on the reference load cell. The method, in an embodiment, comprises a step of detecting a reference weight signal representative of the force exerted by the object on the reference load cell.

The method, in an embodiment, comprises a step of detecting a flat weight signal representative of the compression force exerted by the object on the reference load cell when the baler lays on a flat field. The method, in an embodiment, comprises a step of comparing said reference weight signal with said flat weight signal, calculating, through said comparison, a gradient correction factor. The method in an embodiment, comprises a step of applying the gradient correction factor to the flexion (load) parameter, to derive the weight parameter. Thus, in an embodiment, the weight parameter is derived as a function of the flexion parameter and of the reference weight signal.

In an embodiment, the weight parameter is derived as a function of the load parameter detected by said at least one load cell and of the reference weight signal detected by the reference load cell.

This and other features of the invention will become more apparent from the following detailed description of a preferred, non-limiting example embodiment of it, with reference to the accompanying drawings, in which:

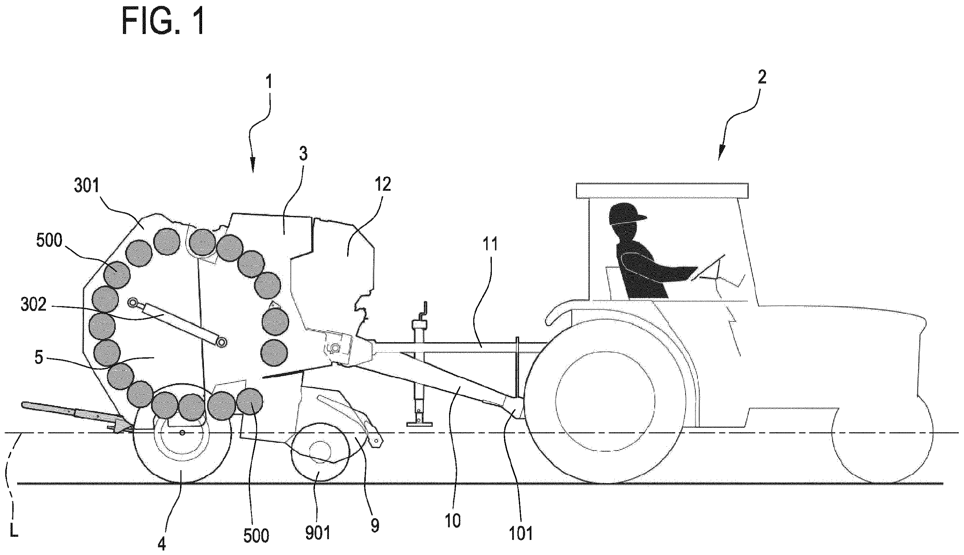

- Figure 1 illustrates a baler connectable to a tractor, according to the present description, and the tractor;

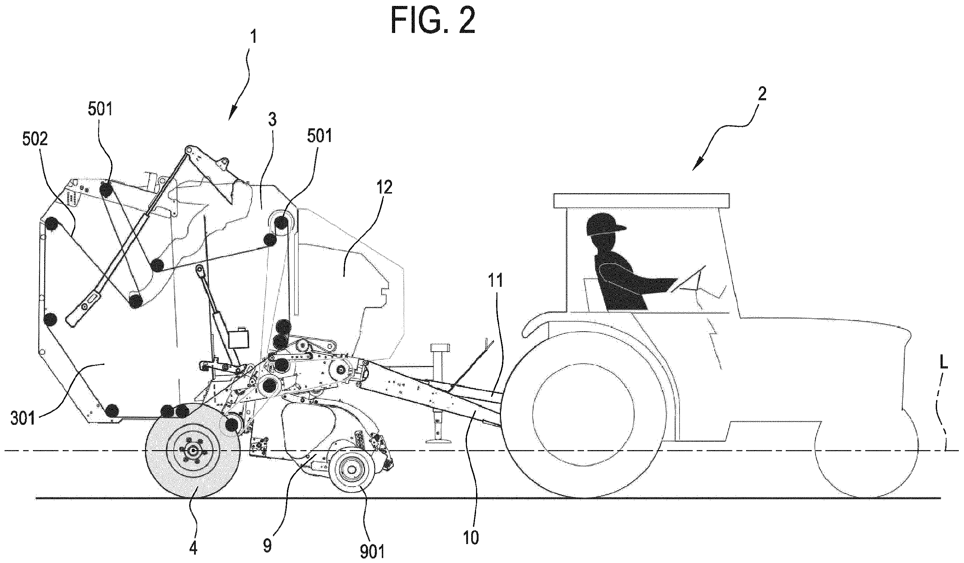

- Figure 2 illustrates an embodiment of the baler of figure 1, and the tractor;

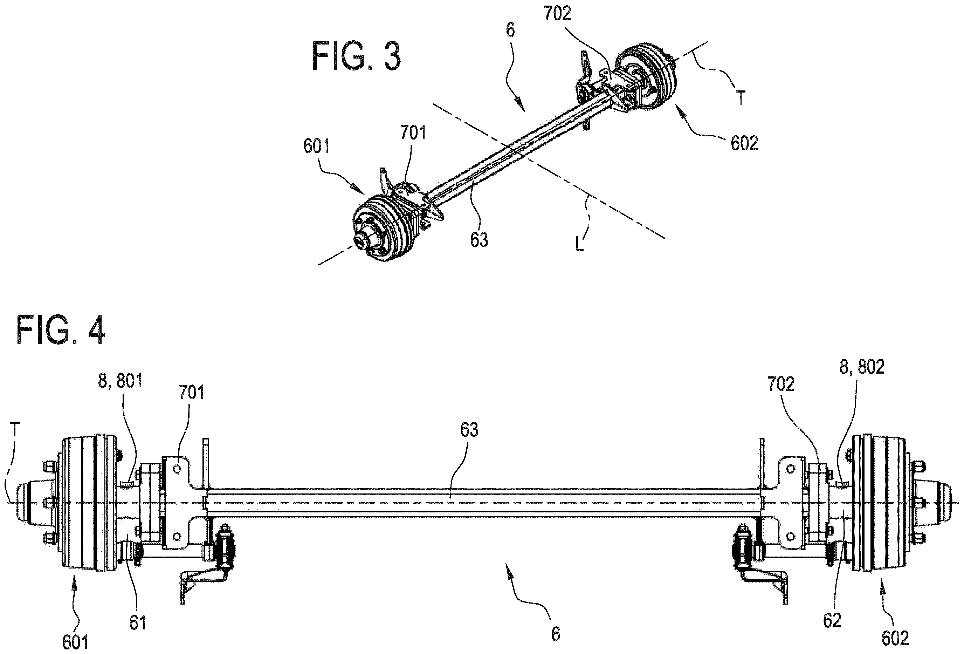

- Figures 3 and 4 illustrate an axle of the baler of figure 1, in perspective view and in lateral view, respectively;

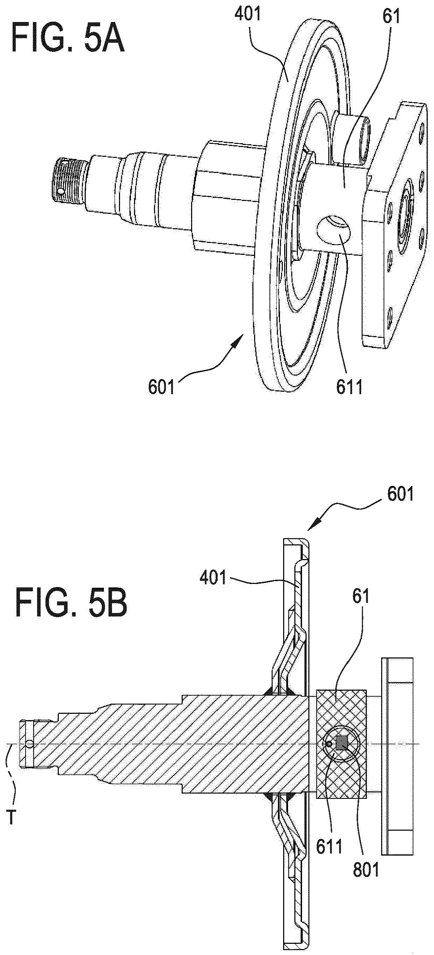

- Figures 5A and 5B illustrate an embodiment of a first (or second) hub of the axle in figures 3 and 4, in perspective view and in cross section, respectively;

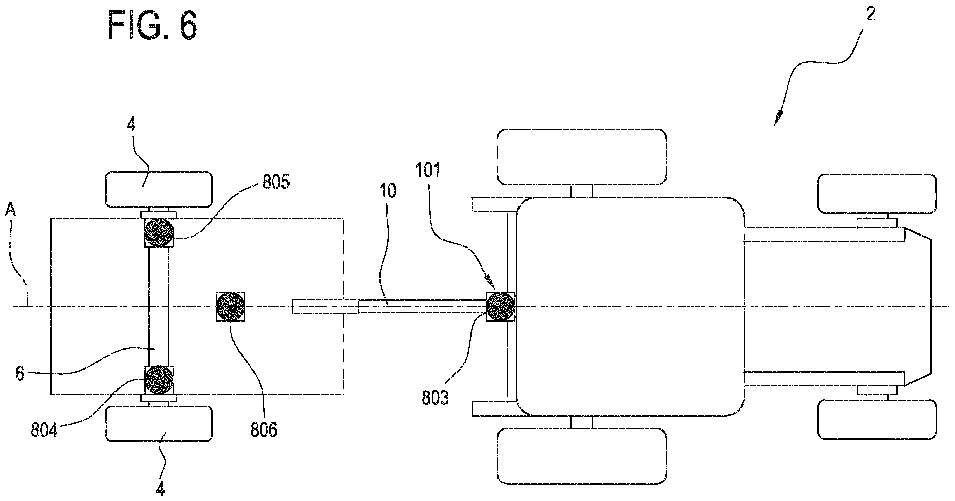

- Figure 6 illustrate the baler of figure 1, view from above, according to a possible embodiment.

With reference to the accompanying drawings, the numeral 1 denotes a baler connectable to a tractor, according to the present disclosure.

The baler 1 is connectable to a tractor 2. The baler 1, in an embodiment, includes a tongue (or hitch) 10. The tongue 10 is connectable to tractor 2 at a coupling point 101. The tongue 10 is configured to allow the tractor 2 towing the baler 1. The baler 1, in an embodiment, includes a drive shaft 11. The drive shaft 11, in an embodiment, is a cardan shaft. The drive shaft 11 is configured to transmit mechanical rotation from a motor of the tractor 2 to the baler 1.

The baler 1 includes an axle 6, having a first end 601 and a second end 602. The baler 1 includes a first wheel 4 and a second wheel 4. The axle 6 is pivotally connected, at its end 601, 602, to the pair of wheels 4, through a pair of wheel rims, including a first wheel rim 401 and a second wheel rim.

The baler 1, in an embodiment, includes a frame 3. The frame 3 in an embodiment is supported on the axle 6. The frame 3 is connected to the axle at a first connecting zone 701 and at a second connecting zone 702. The first connecting zone 701, in an embodiment, is proximate to the first end 601 of the axle 6. The second connecting zone 702, in an embodiment, is proximate to the second end 602 of the axle 6.

The baler 1, in an embodiment, includes a tailgate 301. The tailgate 301 is connected to the frame 3. The tailgate 301 is movable between a closed position and an open position. The open position is configured for discharging the bale.

The baler 1, in an embodiment, includes a chamber 5. The chamber 5 is configured for receiving crops and for housing a formed (forming) bale. The baler 1, in an embodiment, includes a plurality of rollers 500. The plurality of rollers 500, in an embodiment, delimits the chamber 5. The rollers 500 are configured to rotate. In an embodiment, a rotation of the rollers 500 provides a formation of the bale.

The baler 1, in an embodiment, includes a plurality of belts 502. The baler 1, in an embodiment, includes a plurality of belt sprockets 501. The belts 502 are movable by a rotation of the belts sprockets 501. In an embodiment, a movement of the belts 502 provides a formation of the bale.

The tailgate 301 in the closed position (illustrated) cooperates with the frame 3 to delimit the chamber 5.

The baler 1, in an embodiment, includes a cylinder-piston actuator 302. The cylinder-piston actuator 302, in an embodiment, is a double effect actuator. The cylinder piston actuator 302, in an embodiment, is connected to the frame 3. The cylinder piston actuator 302, in an embodiment, is connected to the tailgate 301. The cylinder piston actuator 302, in an embodiment, is configured to move the tailgate 301 from the open position to the closed position. The cylinder piston actuator 302, in an embodiment, is configured to move the tailgate 301 from the closed position to the open position.

The baler 1, in an embodiment, includes a binder 12. The binder 12 in an embodiment is provided in the frame 3. The binder 12 is configured for binding the bale with a fastening element.

The baler 1, in an embodiment, includes a pick-up assembly 9. The pick-up assembly 9 is configured to collect the crops. The pick-up assembly, in an embodiment, includes a pick-up shaft having rake teeth. The pick-up shaft is configured to rotate. The pick-up assembly 9 in an embodiment comprises a pair of pick-up wheels 901, movably connected to the ends of the pick-up shaft.

The baler 1, in an embodiment, includes a pushing rotor. The pushing rotor is positioned between the pick-up assembly 9 and the chamber 5, to feed the crops collected by the pick-up assembly 9 to the chamber 5. In another embodiment, the pick-up assembly itself is configured to feed the collected crops to the chamber 5.

The axle 6, in an embodiment, includes a central shaft 63. The axle 6, in an embodiment, includes a first hub 61. The first hub 61 is removably connected to the central shaft 63. The first hub 61 provides the first end 601 of the axle 6. The axle 6, in an embodiment, includes a second hub 62. The second hub 62 is removably connected to the central shaft 63. The second hub 62 provides the second end 602 of the axle 6.

The baler 1, in an embodiment, includes an extensometer 8. The baler 1, in an embodiment, includes a first extensometer 801 and a second extensometer 802.

The extensometer 8 is attached to the axle 6. The first extensometer 801, in an embodiment, is attached to the first hub 61. The second extensometer 802, in an embodiment, is attached to the second hub 62.

In at least one embodiment, an aperture 611 is provided in at least a portion of the axle 6. The aperture 611 is provided at a lateral surface of the axle 6; preferably, by subtraction of material.

The aperture 611 defines an inner surface. In an embodiment, the extensometer 8 is attached to the inner surface of the aperture 611.

In an embodiment, a first aperture 611 is provided in the first hub 61; a second aperture 612 may be provided in the second hub 62. The first aperture 611 defines an inner surface. In an embodiment, the first extensometer 801 is attached to the inner surface of the first aperture 611. The second aperture defines an inner surface. In an embodiment, the second extensometer 802 is attached to the inner surface of the second aperture.

The first extensometer 801, in an embodiment, is attached to an external (radial) surface of the first hub 61. The second extensometer 802, in an embodiment, is attached to an external (radial) surface of the second hub 62.

Therefore, the first 801 and the second 802 extensometers are respectively attached to the axle 6 at a first and a second measuring zone (respectively defined by the first 61 and second 62 hubs). The first and a second measuring zone are spaced apart from the first connecting zone 701 and the second connecting zone 702, respectively.

The baler 1 (and the tractor 2) are movable in a longitudinal direction L. The axle 6 is elongated in a transversal direction T. The wheels rotate around an axis, defined by the transversal direction T. The transversal direction T, in an embodiment, is perpendicular to the longitudinal direction L. The first 801 and the second 802 extensometers, in an embodiment, are elongated in the transversal direction T.

In an embodiment, the section area of the axle 6 in correspondence to the first 61 and second 62 hubs is lower than the section area of the axle 6 in correspondence to the central shaft 63.

The first 801 extensometer is configured to detect a flexion parameter, representative of a flexion of the first hub 61. The second 802 extensometer is configured to detect a flexion parameter, representative of a flexion of the second hub 62.

The baler 1 includes a processing unit. The processing unit, in an embodiment, is connected to the first extensometer 801, to receive the flexion parameter, representative of a flexion of the first hub 61. The processing unit, in an embodiment, is connected to the second extensometer 802, to receive the flexion parameter, representative of a flexion of the second hub 62. The processing unit, in an embodiment, is programmed to process the flexion parameter, representative of a flexion of the first hub 61 and the flexion parameter, representative of a flexion of the second hub 62, to derive a weight parameter representative of a weight of the bale.

In an embodiment, the weighing system comprises a couple of axle load cells 804, 805, positioned at the axle 6. In an embodiment, the axle load cells 804, 805 of said couple of axle load cells 804, 805 are positioned on the axle 6, at a same distance from a symmetry axis A of the baler 1. The symmetry axis A passes by the hitch 10. The symmetry axis A, in an embodiment, is parallel to the longitudinal direction L.

In an embodiment, the weighing system comprises a hitch load cell 803 positioned at the coupling point 101.

In an embodiment, the baler 1 includes a reference load cell 806. In an embodiment, the baler 1 includes an object having a predetermined mass, being supported by the reference load cell 806.

The present description also covers a method for weighing a round bale in a baler 1 to be connected to a tractor 2.

The method, in an embodiment, includes a step of providing a frame 3.

The method, in an embodiment, includes a step of providing a tailgate 301. The method, in an embodiment, includes a step of providing an axle 6. The axle 6 has a first end 601 and a second end 602. The method, in an embodiment, includes a step of providing a pair of wheels 4.

The frame 3 in an embodiment includes a chamber 5. The frame 3 in an embodiment cooperates with the tailgate 301 to delimit the chamber 5.

The frame 3 in an embodiment is supported by the axle 6. The frame 3 in an embodiment is connected to the axle 6 in a first 701 and second 702 connecting zone.

The axle 6 is pivotally connected to opposite wheels at its ends 601, 602.

The method, in an embodiment, includes a step of moving the tailgate 301 to a closed position.

The method, in an embodiment, comprises a step of collecting crops. The method, in an embodiment, comprises a step of forming a bale in the chamber 5. The bale is formed by gathering crops inside the chamber 5.

The bale is formed by rotating crops received in the chamber 5. The crops are collected and received in the chamber 5 through a pick-up assembly 9.

The method, in an embodiment, includes a step of providing an extensometer 8 (strain gauge). The method, in an embodiment, comprises a step of attaching the extensometer 8 to the axle 6.

The method, in an embodiment, includes a step of providing a first extensometer 801. The method, in an embodiment, includes a step of providing a second extensometer 802.

The method, in an embodiment, comprises a step of attaching the first extensometer 801 to the first hub 61. The first 601 extensometer, in an embodiment, is attached to an external surface of the first 61 hub. The first 601 extensometer, in an embodiment, is attached to an inner surface of an aperture 611 provided inside the first 61 hub.

The method, in an embodiment, comprises a step of attaching the second extensometer 802 to the second hub 62. The second 602 extensometer, in an embodiment, is attached to an external surface of the second 62 hub.

The second 602 extensometer, in an embodiment, is attached to an inner surface of an aperture provided inside the second 62 hub.

The first hub 61, in an embodiment, defines a first measuring zone interposed between the first end 601 of the axle 6 and the first connecting zone 701. The second hub 62, in an embodiment, defines a second measuring zone interposed between the second end 602 of the axle 6 and the second connecting zone 702.

The method, in an embodiment, comprises a step of processing the flexion parameter. The method, in an embodiment, comprises a step of deriving a weight parameter representative of a weight of the bale, as a function of the flexion parameter.

The method, in an embodiment, includes a step of detecting a flexion parameter. The flexion parameter is representative of a flexion of the axel 6. Specifically, the flexion parameter is representative of a flexion of the first hub 61 and/or the second hub 62 of the axel 6.

The detecting of the flexion parameter in an embodiment is carried out through the extensometer 8.

The method provides a step of binding the formed bale with a fastening element. In an embodiment, during the step of binding the formed bale, the tailgate 301 remains closed.

The step of detecting a flexion parameter may come before or after the step of binding the bale.

The method comprises a step of moving the tailgate 301 to an open position, to discharge the formed bale. The method in an embodiment comprises a step of discharging the formed bale.

The step of detecting a flexion parameter comes before the step of discharging the bale.

The following paragraphs, listed in alphanumeric order for reference, are non-limiting example modes of describing this invention.

A00. Baler (1) connectable to a tractor (2) for making round bales, comprising:
- an axle (6) having a first end (601) and a second end (602);
- a first wheel (4) and a second wheel (4), rotatably coupled respectively to the first end (601) and to the second end (602) of the axle (6);
- a frame (3), including a chamber (5) adapted to receive agricultural products and to house a formed bale, the frame (3) being supported on the axle (6);
- a weighing system, designed to provide information on the weight of the bale, and configured to detect a load parameter, representative of a load exerted at least on the axle;
wherein the weighing system includes a processing unit, arranged to receive the load parameter and to process it to derive a parameter representative of the weight of the bale.
A0. The baler (1) according to paragraph A00, wherein the weighing system includes at least one load cell (803, 804, 805), positioned on an axle (6) and / or in the coupling point (101), for detecting a load parameter, representative of a load exerted thereon.
A0.1. The baler (1) according to paragraph A0, comprising an attachment (10), configured to connect the frame (3) to the tractor (2) at a coupling point (101),
wherein the weighing system includes an attachment load cell (803) located at the coupling point (101) and a pair of axle load cells (804, 805), positioned on the axle (6).
A001. The baler (1) according to any one of paragraphs A00 to A0.1, wherein the weighing system includes a measuring element, configured to detect a reference parameter (which could, in an embodiment, be representative of an inclination of the baler).
A001.1. The baler (1) according to paragraph A001, wherein the processing unit is arranged to receive the load parameter and the reference parameter.
A002. The baler (1) according to paragraph A001 or A001.1, wherein the measuring element includes:
   - an object having a predetermined mass;
   - a reference load cell (806) configured to detect a reference weight signal, representative of a force exerted by the object on the reference load cell (806), the object being supported by the reference load cell (806).
A003. The baler (1) according to paragraph A001 or A001.1, wherein the measuring element includes at least one accelerometer (the accelerometer may include one or more of the characteristics given in the present description).
A. The baler (1) according to any one of paragraphs A00 to A003, in which the weighing system includes a (strain gauge or) extensometer (8), attached (coupled) to the axle (6) and configured to detect a flexion parameter representative of a flexion (deflection) of at least a portion of the axle (6),
wherein the processing unit is connected to the extensometer (8) to receive the flexion parameter and is programmed to process the flexion parameter to derive the a weight parameter representative of the weight of the bale.A1. The baler (1) of paragraph A, wherein the frame (3) is connected to the axle (6) at a first connecting zone (701), and wherein the extensometer (8) is attached to the axle (6) at a measuring zone which is spaced apart from the first connecting zone (701).
A1.1. The baler (1) of paragraph A1, wherein the frame (3) is connected to the axle (6) at a second connecting zone (702), proximate to the second axle end (602), wherein the first connecting zone (701) is proximate to the first axle end (601), and wherein the weighing system includes:
   - a first extensometer (801) attached to the axle (6) at a first measuring zone positioned between the first connecting zone (701) and the first axle end (601);
   - a second extensometer (802) attached to the axle (6) at a second measuring zone positioned between the second connecting zone (702) and the second axle end (602).
A1.1.1. The baler (1) of paragraph A1.1, wherein the axle (6) includes:
   - a first hub (61), providing the first end (601) of the axle (6) and the first measuring zone;
   - a second hub (62), providing the second end (602) of the axle (6) and the second measuring zone;
   - a central shaft (63), interposed between the first (61) and the second (62) hubs, the first (61) and the second (62) hubs being removably connected to the central shaft (63).
A2. The baler (1) of any of the previous paragraphs from A to A1.1.1, wherein the axle (6) includes:
   - a first hub (61), providing the first end (601) of the axle (6);
   - a second hub (62), providing the second end (602) of the axle (6);
   - a central shaft (63), interposed between the first (61) and the second (62) hubs, the first (61) and the second (62) hubs being removably connected to the central shaft (63),
   and wherein the weighing system includes a first extensometer (801), attached to the first hub (61), and a second extensometer (802), attached to the second hub (62).
A3. The baler (1) any of the previous paragraphs from A to A2, wherein said at least a portion of the axle (6) includes an aperture (611), which defines an inner surface, and wherein the extensometer (8) is attached to the inner surface of the aperture (611).
A4. The baler (1) of any of the previous paragraphs from A to A3, wherein the extensometer (8) is connected to the axle (6) at a measuring zone, wherein the axle (6) has a reduced section area at the measuring zone.
A5. The baler (1) of any of the previous paragraphs from A to A4, wherein the weighing system includes, at a measuring zone, a first extensometer (801), elongated in a first direction, and a second extensometer (802), elongated in a second direction, wherein the second direction is transversal to the first direction.
A6. The baler (1) of any of the previous any of the previous paragraphs from A to A5, wherein the weighing system includes:
   - an object having a predetermined mass;
   - a load cell configured for detecting a weight signal representative of the compression force exerted by the object on the load cell, the object being supported on the load cell,
   and wherein the processing unit is programmed for deriving the weight parameter as a function of the flexion parameter and of the weight signal detected by the load cell.
B. A method for weighing a round bale in a baler (1) to be connected to a tractor (2), comprising the following steps:
   - providing a frame (3) including a chamber (5) and supported by an axle (6) which is pivotally connected to opposite wheels (4) at its ends (601, 602);
   - forming a bale by gathering crops inside the chamber (5),
   characterized in that it further comprises the following steps:
   - detecting a flexion parameter representative of a flexion of the axel (6);
   - deriving a weight parameter representative of a weight of the bale, as a function of the flexion parameter.
B1. The method of paragraph B, wherein the detected step is carried out through one or more extensometers (8) attached to the axle (6) at a measuring zone interposed between one of the axle ends (601, 602) and a connecting zone (701, 702) where the frame (3) is connected to the axle (6).
B2. The method of paragraph B or paragraph B1, further comprising the following steps:
   - providing an object having a predetermined mass and supported on a load cell included in the baler (1);
   - detecting a weight signal representative of the compression force exerted by the object on the load cell,
   wherein the weight parameter is derived as a function of the flexion parameter and of the weight signal.

## Claims

1. A baler (1) connectable to a tractor (2) for providing round bales, comprising:
- an axle (6) having a first end (601) and a second end (602);
- a first wheel (4) and a second wheel (4), pivotally coupled to the first (601) and second end (602) of the axle (6), respectively;
- a frame (3) including a chamber (5) for receiving crops and for housing a formed bale, the frame (3) being supported on the axle (6);
- a hitch (10) configured to connect the frame (3) to the tractor (2) at a coupling point (101);
- a weighing system, for providing information about a weight of the bale, the weighing system including at least one load cell (803, 804, 805), being positioned at the axle (6) and/or at the coupling point (101) for detecting a load parameter, representative of a load force exerted thereon, **characterized in that** the weighing system includes:
- an object having a predetermined mass;
- a reference load cell (806) configured for detecting a reference weight signal representative of a force exerted by the object on the reference load cell (806), the object being supported by the reference load cell (806),
- a processing unitprogrammed for deriving a weight parameter representative of a weight of the bale, as a function of the load parameter detected by said at least one load cell (803, 804, 805) and of the reference weight signal detected by the reference load cell (806).

2. The baler (1) of claim 1, wherein the weighing system includes a plurality of load cells (803, 804, 805), defining said at least one load cell (803, 804, 805).

3. The baler (1) of claim 2, wherein the plurality of load cells (803, 804, 805) includes a hitch load cell (803) positioned at the coupling point (101).

4. The baler (1) of claim 2 or claim 3, wherein the plurality of load cells (803, 804, 805) includes a couple of axle load cells (804, 805) positioned at the axle (6).

5. The baler (1) of claim 4, wherein the axle load cells (804, 805) of said couple of axle load cells (804, 805) are positioned on the axle (6), at a same distance from a symmetry axis (A) of the baler (1), said symmetry axis (A) passing by the hitch (10).

6. The baler (1) of claim 4 or claim 5, wherein the axle load cells (804, 805) of said couple of axle load cells (804, 805) are interposed between the frame (3) and the axle (6) and are configured to measure by compression a weight force exerted thereon.

7. The baler (1) of any of the previous claims from 3 to 6, wherein the hitch load cell (803) is configured to measure by traction a load exerted thereon.

8. The baler (1) of any of the previous claims, wherein the reference load cell (806) is linked to the frame (3).

9. The baler (1) of claim 8, wherein the reference load cell (806) is connected to the frame (3) in a nearby of a center of mass of the baler (1).

10. The baler (1) of any of the previous claims, wherein said weighing system includes an extensometer (8) attached to the axle (6) and configured to detect the load parameter as a function of a flexion of at least a portion of the axle (6).

11. The baler (1) of claim 10, wherein the frame (3) is connected to the axle (6) at a first connecting zone (701) and at a second connecting zone (702), wherein the first connecting zone (701) is proximate to the first axle end (601), and the second connecting zone (702) is proximate to the second axle end (602), and wherein the weighing system includes:
- a first extensometer (801) attached to the axle (6) at a first measuring zone positioned between the first connecting zone (701) and the first axle end (601);
- a second extensometer (802) attached to the axle (6) at a second measuring zone positioned between the second connecting zone (702) and the second axle end (602).

12. A method for weighing a round bale in a baler (1) including a hitch (10) to be connected to a tractor (2) at a coupling point (101), the method comprising the following steps:
- providing a frame (3) including a chamber (5) and supported by an axle (6) which is pivotally connected to opposite wheels (4) at its ends (601, 602);
- forming a bale by gathering crops inside the chamber (5),
- detecting a load parameter through measuring a load force exerted on at least one load cell (803, 804, 805), being positioned at the axle (6) and/or at the coupling point (101),
**characterized in that** it further comprises the following steps:
- providing an object having a predetermined mass and being supported on a reference load cell (806) included in the baler (1);
- detecting a reference weight signal representative of a force exerted by the object on the reference load cell (806),
- deriving a weight parameter representative of a weight of the bale, as a function of the load parameter detected by said at least one load cell (803, 804, 805) and of the reference weight signal detected by the reference load cell (806).

13. The method of claim 12, wherein the step of detecting the load parameter is carried out through a couple of axle load cells (804, 805) positioned on the axle (6) and through a hitch load cell (803) positioned at the coupling point (101).

14. The method of claim 13, wherein the step of detecting the load parameter includes a sub step of measuring a traction force exerted on the hitch load cell (803) and a sub step of measuring a compression force exerted on the couple of axle load cells (804, 805).

15. The method of any of the previous claims from 12 to 14, wherein the reference load cell (806) is connected to the frame (3) in a nearby of a center of mass of the baler (1).
